# EUROPÄISCHE PATENTSCHRIFT

(11) **EP 2 521 318 B1**
(45) Veröffentlichungstag und Bekanntmachung des Hinweises auf die Patenterteilung: **22.04.2015**
(21) Anmeldenummer: 12165491.7
(22) Anmeldetag: 25.04.2012
(51) Int. Cl.: H04L 12/26, H04L 12/24

(54) **Bestimmung der Übertragungsleistung in Datennetzen**
Determination of the transfer capacity in data networks
Détermination de la capacité de transmission dans des réseaux de données

(30) Priorität: 06.05.2011 DE 102011100793
(43) Veröffentlichungstag der Anmeldung: 07.11.2012
(73) Patentinhaber: Vodafone Holding GmbH, 40213 Düsseldorf (DE)
(72) Erfinder: Henschel, Jens, 34628 Willingshausen (DE)
(74) Vertreter: Jostarndt, Hans-Dieter

(56) Entgegenhaltungen:
- US-A1- 2002 167 936
- US-A1- 2006 031 469
- US-A1- 2009 113 045

## Beschreibung

### Gebiet der Erfindung

Die Erfindung betrifft einen Netzwerkknoten für die Bestimmung der Übertragungsleistung in bi-direktionalen Datenleitungen in einem Datennetz sowie ein entsprechendes System und Verfahren.

### Hintergrund der Erfindung

Das Internet stellt heute eine Vielzahl an Anwendungen für den Benutzer zur Verfügung, beispielsweise um Musik zu hören, um ein Video zu betrachten, um Web-Seiten aufzurufen und darzustellen oder um Online-Handel zu betreiben. Jede dieser unterschiedlichen Anwendungen nutzt die Internetverbindungen unterschiedlich, und die benötigte Leistung der Internetverbindung wie die zur Verfügung gestellte Bandbreite zum Übertragen von Daten hängt von den Anwendungserfordernissen und den Benutzerwünschen ab.

Um die momentane Datenübertragungsrate (oder Datenrate) einer Internetverbindung mit den Angaben der Betreiber vergleichen zu können und um gegebenenfalls Datenübertragungsprobleme feststellen oder analysieren zu können, sind sogenannte Speed-Tester (oder Internet-Bandbreiten-Speed-Tester) als Messinstrumente auf dem Markt verfügbar. Die zu messende Datenrate (Datenmenge pro Zeiteinheit) wird oft auch als Bandbreite der Internetverbindung bezeichnet. Diese Speed-Tester sind zum Teil externe Geräte zum Anschluss an ein Computersystem, beispielsweise ein an das Internet mittels einer geeigneten Datenverbindung angeschlossener Personalcomputer (PC), auf dem ein entsprechendes Messprogramm (Test-Software) läuft. Zum anderen können die Speed-Tester als Test-Software ausgeführt sein, die über ein geeignetes Medium (beispielsweise von einer CD oder von einem Daten-Stick) auf dem an das Internet angeschlossenen Computer geladen und von dort aus ausgeführt wird.

Alternativ zu Datenträgern kann eine solche Test-Software auch über das Internet auf den entsprechenden Computer zur Ausführung geladen werden.

US 2006/0031469 A1 offenbart einen Messprozess mit den folgenden Schritten: (a) Übertragen eines Testdatenstroms über einen Übertragungskanal, und (b) Messen eines Indikators für die Servicequalität für eine Echtzeitkommunikationsapplikation basierend auf der Übertragung; dem Verwenden dieses Messprozesses in einem kontinuierlichen Abfragen einer Vielzahl an Übertragungskanälen in der Anwendungsumgebung der Echtzeitkommunikationsapplikation; einem Zusammentragen von Daten des Messprozesses; dem Vergleichen des gemessenen Werte mit einem Schwellenwert, Ausgeben einer Darstellung zur Einhaltung oder Nicht-Einhaltung des Schwellenwertes; und Ausgabe eines Trendreports basierend auf diesen Daten, wobei die Echtzeitkommunikationsapplikation in Referenz zu dem Schwellenwert gesteuert wird. Diese Lösung kann beispielsweise für VoIP-Anwendungen, Videokonferenz-Anwendungen oder Spracherkennungs-Anwendungen ausgewählt werden. Beispielsweise kann die Messung einen Sprachqualitätsindikator für eine VoIP-Anwendung umfassen.

US2002/0167936 A1 offenbart ein Qualitäts-Testschema zum Auflisten des Serviceniveaus spezifischer Telefongespräche für ein VoIP-Netzwerk. Messsonden sind verteilt über die Grenzen eines VoIP-Netzwerks. Jede Messsonde ist in der Lage, Gespräche mit unterschiedlichen Serviceniveaus zu anderen Messsonden über das VoIP-Netzwerk zu platzieren und die Gesprächsqualität unter Verwendung eines Messalgorithmus wie PAMS oder PSQM zu messen. Die Messergebnisse werden auf einer eingehenden Basis gesammelt, um Informationen zur Qualität von Telefongesprächen auf einem VoIP-Netzwerk zu erhalten. Die Information wird dabei mit einem Schwellenwert verglichen, um die gemessene Performance zu einem vereinbarten garantierten Serviceniveaus zu vergleichen.

Wie aus dem Artikel von J.Jongerius "Broadband Speed Tester Benchmarks", http://www.myspeed.com/whitepapers/benchmarks.html, Visualware, 04.05.2005, ersichtlich, liefern unterschiedliche Speed-Tester sehr unterschiedliche und teilweise nicht reproduzierbare Ergebnisse für die tatsächlich verfügbare Datenrate (Bandbreite) der Internet-Breitbandverbindung, die als Kabelmodem mit einer bekannten Download-Geschwindigkeit von 4,23 Mbps zum Herunterladen (Download) von Daten von einer Datenquelle und einer bekannten Upload-Geschwindigkeit von 370 kbps zum Hochladen (Upload) von Daten zu einem Datenempfänger ausgeführt ist. Ursachen für variierende Ergebnisse der Datenratenmessung können dabei beispielsweise in der Genauigkeit der Zeitmessung der Start und Endzeiten des Downloads/Uploads sowie in der Berücksichtigung/Nichtberücksichtigung von einer Unterauslastung bei maximal verfügbaren Datenraten zu Beginn des Uploads/Downloads liegen.

US 2009/0113045 offenbart ein Leistungstestsystem für DSL-Modems. Dabei ist vorgesehen, einen Geschwindigkeitstest der Leitung beim Herunterladen, beim Hochladen oder in beiden Richtungen durchzuführen. Es ist jedoch nicht näher ausgeführt, unter welchen Bedingungen die erwähnten Tests durchgeführt werden sollen.

Doch selbst bei Berücksichtigung der voranstehenden Effekte führen die auf dem Markt verfügbaren Speed-Tester (oder Internet-Bandbreiten-Speed-Tester) nicht zu realistischen Ergebnissen, da diese Speed-Tester die Effekte eines entgegengesetzten parallelen Datenverkehrs in bidirektionalen Datenverbindungen auf die Datenrate unberücksichtigt lassen.

### Zusammenfassung der Erfindung

Es ist daher eine Aufgabe der Erfindung, ein Mittel bereitzustellen, mit dem die Übertragungsleistung bi-direktionaler Datenverbindungen in Datennetzen zuverlässig bestimmt werden kann.

Diese Aufgabe wird gelöst durch einen Netzwerkknoten, vorzugsweise ein Server oder ein Router, für ein Datennetz mit mehreren Netzwerkknoten, umfassend ein auf dem Netzwerkknoten installiertes Computermessprogramm, vorgesehen zur Bestimmung der Übertragungsleistung in dem Datennetz mittels einer dynamischen Bestimmung einer verfügbaren Datenrate in einer bi-direktionalen Datenverbindung zu einem zweiten Netzwerkknoten, dadurch gekennzeichnet, dass das Computermessprogramm so ausgestaltet ist, dass es zumindest für ein Herunterladen zumindest einer ersten Referenzdatei mit einer ersten Referenzgröße von dem zweiten Netzwerkknoten mit einem ersten Zeitpunkt als Startpunkt des Herunterladens und einem zweiten Zeitpunkt als Endpunkt des Herunterladens und für ein Hochladen zumindest einer zweiten Referenzdatei mit einer zweiten Referenzgröße zu dem zweiten Netzwerkknoten zwischen dem ersten und zweiten Zeitpunkt simultan zu dem Herunterladen der ersten Referenzdatei vorgesehen ist, und zumindest dafür vorgesehen ist, aus dem Zeitintervall zwischen erstem und zweitem Zeitpunkt und der Referenzgröße der ersten Referenzdatei die verfügbaren Datenrate für das Herunterladen zu bestimmen.

Hierbei bezeichnet der Ausdruck "Netzwerkknoten" ein Gerät, das mit einem Datennetz, beispielsweise ein Computernetzwerk, ein Client-Server-Netzwerk oder das Internet, ver bunden ist oder Teil dieses Datennetzes ist. Netzwerkknoten sind dabei Punkte, an denen verschiedene Teile eines Datennetzes oder verschiedene Datennetze verbunden sind. Über Netzwerkknoten läuft daher die Kommunikation zwischen den angeschlossenen Teilen des oder der Datennetze. Ein Netzwerkknoten, insbesondere der erste und zweite Netzwerkknoten, kann dabei beispielsweise als Router, Server oder integriertes Zugriffsgerät (IAD) ausgeführt sein. Netzwerkknoten können adressierbar sein und durch ein Netzwerkmanagement verwaltet werden. Der Netzwerkknoten gemäß der vorliegenden Erfindung umfasst auch Software, unter anderem das Computermessprogramm. Das Computermessprogramm ist beispielsweise ein linux-basiertes Programm. Das Computermessprogramm kann auf Ubuntu Linux basieren, was eine einfache Nutzung von Linux ermöglicht. Mit Ubuntu kann ein einfach zu installierendes und leicht zu bedienendes Betriebsnetzwerk mit aufeinander abgestimmter Software geschaffen werden. Hierbei wird für jede Aufgabe genau ein Programm zur Verfügung gestellt. Das Computermessprogramm kann beispielsweise online auf die Netzwerkknoten installiert werden. Alternativ kann es beispielsweise über externe Datenträger, wie beispielsweise einen USB-Stick, auf Geräte wie die Netzwerkknoten geladen werden. Das Computermessprogramm kann zusätzlich zur Bestimmung der Übertragungsleistung auch noch weitere relevante Größen für die Datenübertragung messen und auswerten. Solche Größen sind beispielsweise Ping-Zeit, DNS Abfragezeit, RTP Jitter und Paketverlust von passiven und aktiven VoIP-Verbindungen und die Webserver-Leistung. Die mit dem Computermessprogramm erhaltenen Ergebnisse können an entsprechend gewählte Stellen im Datennetz nach der Bestimmung übertragen werden.

Datennetze sind dabei Einrichtungen, mit denen Datenverbindungen zwischen Geräten, beispielsweise Netzwerkknoten, hergestellt werden. Datennetze sind beispielsweise lokale Netze (LAN) oder globale Netze (Global Area Network) wie das Internet. Nach der Versorgungsstruktur unterscheidet man Front-End-Backbone- und Back-End-Netze, die Endgeräte bzw. Front-End-Netze oder Back-End-Systeme, wie z.B. Server und Host, untereinander und mit anderen Netzen oder Systemen verbinden. Die Datenverbindungen in dem Datennetz können über Datenkabel oder über drahtlose Datenverbindungen realisiert sein.

Übertragungsleistung bezeichnet hier die Menge an Daten, die pro Zeiteinheit über eine Datenverbindung (Datenleitung) von einem Netzwerkknoten zu einem anderen Netzwerkknoten übertragen werden kann. Eine bi-direktionale Datenverbindung erlaubt die Datenübertragung in beide Richtungen der Datenverbindung, d.h. beispielsweise von einem ersten zu einem zweiten Netzwerkknoten sowie von dem zweiten zu dem ersten Netzwerkknoten.

Das Herunterladen bezeichnet dabei die Übertragung von Daten von außerhalb (beispielsweise vom zweiten Netzwerkknoten) auf den Netzwerkknoten. Das Herunterladen ist das Gegenstück zum Hochladen, das die Datenübertragung (Datenfluss) in umgekehrter Richtung, also vom Netzwerkknoten nach außerhalb (beispielsweise zum zweiten Netzwerkknoten hin) bezeichnet. In einer Ausführungsform erfolgt das Herunterladen gemäß HTTP und/oder das Hochladen erfolgt gemäß FTP. HTTP ist das Protokoll zur Übertragung von Daten über ein Netzwerk wie das "World Wide Web". Das FTP (File Transfer Protocol) ist ein spezifiziertes Netzwerkprotokoll zur Übertragung von Dateien über IP-Netzwerke. Das FTP verwendet dabei für die Steuerung und Datenübertragung jeweils separate Verbindungen.

Der Begriff "Referenzdatei" bezeichnet eine Datei, die eine genau bestimmte Menge an Daten (Dateigröße) umfasst. Diese genau bestimmte Dateigröße wird in der vorliegenden Erfindung als Referenzgröße bezeichnet. Die genaue Kenntnis der Referenzgröße der Referenzdateien, insbesondere der ersten bis vierten Referenzgröße der ersten bis vierten Referenzdateien, ist für eine Bestimmung der Übertragungsleistung Grundvoraussetzung, da aus dem Messsignal der Start- und Endpunkt der Datenübertragung für die Referenzdateien das Zeitintervall für die Datenübertragung der Referenzdateien bestimmt wird und mittels der bekannten Referenzgrößen in eine Datenübertragungsrate als die tatsächlich verfügbare Datenrate umgerechnet wird.

Mit dem Netzwerkknoten gemäß der vorliegenden Erfindung wird ein Mittel bereitgestellt, mit dem die Übertragungsleistung bi-direktionaler Datenverbindungen in Datennetzen zuverlässig bestimmt werden kann. Insbesondere führt die erfindungsgemäße Bestimmung der Übertragungsleistung im Gegensatz zu bereits auf dem Markt erhältlichen Speed-Testern zu realsitischen Ergebnissen, da erfindungsgemäß die Effekte eines entgegengesetztem parallelen Datenverkehrs in bi-direktionalen Datenverbindungen auf die Datenrate berücksichtigt werden. Die zweite Referenzdatei stellt hierbei eine Störung in Hochladebetrieb dar, dessen Hochladen je nach Bandbreite der Datenverbindung einen negativen Einfluss auf die verfügbare Datenrate für das Herunterladen einer Datei haben kann. Über die theoretisch vorhandene Bandbreite der Datenverbindung und die bekannte Größe der ersten Referenzdatei wäre theoretisch eine bestimmte Datenrate zu erwarten. Es hat sich gezeigt, dass die tatsächlich verfügbare Datenrate beim Herunterladen geringer als die theoretisch erwartete Datenrate ist, sofern parallel zum Herunterladen eine zweite Datei über diese Datenverbindung zu einem zweiten Netzwerkknoten hochgeladen wird. Um diese Ergebnisse zuverlässig zu gestalten, besitzt die hochzuladene Datei als zweite Referenzdatei ebenfalls eine bestimmte zweite Referenzgröße, damit die Störung des Prozesses des Herunterladens der ersten Referenzdatei bestimmt, vergleichbar und reproduzierbar ist. Diese Art der Bestimmung der Übertragungsleistung über die bi-direktionale Datenverbindung stellt eine aktive Leistungsmessung dar, da hier im Gegensatz zu den auf dem Markt erhältlichen Geräten zur Datenübertragungs-Leistungsmessung aktiv ein bi-direktionaler Datenverkehr gestartet wird. Da dieser aktive Datenverkehr über die bekannten Referenzgrößen der übertragenen Referenzdateien definiert ist, kann die exakte Datenübertragungsleistung für einen realistischen Betrieb zumindest der oder einiger Datenverbindungen in dem Datennetz bestimmt werden. Mit dieser realistischen Messung der Übertragungsleistung einer Datenverbindung zwischen zwei Netzknoten kann die Fehlerursache (oder das Problem) für eine beim Endkunden festgestellte langsame Datenübertragung im Datennetz lokalisiert werden. Beispielsweise kann nachgewiesen werden, ob die langsame Datenübertragung zum Endkunden hin durch eine zu geringe Übertragungsleistung im Datennetz oder vielleicht durch ein Problem auf dem Computer des Endkunden verursacht wird. Beispielsweise kann ein Virus auf dem Computer des Kunden eine langsame Datenübertragung verursachen, die oft fälschlicherweise den Netzbetreibern angelastet wird. Mittels der durchgeführten Bestimmung der Übertragungsleistung im Datennetz kann dann beispielsweise der Endkunde darauf hingewiesen werden, dass sich das Übertragungsproblem nur lokal auf seinem Computer lösen lässt. Außerdem können mit der erfindungsgemäßen Bestimmung der Übertragungsleistung die Eigenschaften des Datennetzes überwacht und gegebenenfalls bei Bedarf verbessert werden. Die Bestimmung der Übertragungsleistung kann einerseits aktiv durch eine Handlung gestartet werden oder indirekt infolge einer Handlung gestartet werden oder sie kann automatisch nach Ablauf einer bestimmten Zeit gestartet werden.

Hierbei ist für eine genaue Bestimmung der verfügbaren Datenrate eine erste Referenzgröße von 10 MB oder mehr vorteilhaft. In einer Ausführungsform beträgt die erste Referenzgröße mehr als 30 MB, vorzugsweise mehr als 50 MB, besonders bevorzugt 100 MB.

In einer weiteren Ausführungsform ist das Computermessprogramm so ausgestaltet, dass es zusätzlich für ein Hochladen zumindest einer dritten Referenzdatei mit einer dritten Referenzgröße zu dem zweiten Netzwerkknoten mit einem dritten Zeitpunkt als Startpunkt des Hochladens und einem vierten Zeitpunkt als Endpunkt des Hochladens und für ein Herunterladen zumindest einer vierten Referenzdatei mit einer vierten Referenzgröße von dem zweiten Netzwerkknoten zwischen dem dritten und vierten Zeitpunkt simultan zu dem Hochladen der dritten Referenzdatei vorgesehen ist, und zumindest dafür vorgesehen ist, aus dem Zeitintervall zwischen drittem und viertem Zeitpunkt und der Referenzgröße der dritten Referenzdatei die verfügbaren Datenrate für das Hochladen zu bestimmen. Hiermit wird zusätzlich zu der realistischen Datenrate für ein Herunterladen auch die realistisch verfügbare Datenrate für ein Hochladen einer Datei bestimmt, so dass für beide Datenübertragungsrichtungen realistische Daten für einen Nutzer verfügbaren Datenrate vorliegen. Insofern ist die Qualität der Datenverbindung zwischen zwei Netzwerkknoten für beide Richtungen bestimmt.

Hierbei ist für eine genaue Bestimmung der verfügbaren Datenrate eine dritte Referenzgröße von 1 MB oder mehr vorteilhaft. In einer Ausführungsform beträgt die dritte Referengröße mehr als 1 MB, vorzugsweise mehr als 2 MB, besonders bevorzugt 3 MB.

Die ersten bis vierten Referenzdateien können auf allen Netzwerknoten in dem Datennetz zur Verwendung durch das Computermessprogramm gespeichert sein oder zusammen mit dem Computermessprogramm auf dem Netzwerkknoten gespeichert sein, auf dem das Computermessprogramm installiert ist. In diesem Fall werden die entsprechenden Referenzdateien zum Herunterladen vor Beginn der Bestimmung der Übertragungsleistung auf den zweiten Netzwerkknoten übertragen, um danach dann während der Ausführung des Computermessprogramms von diesem zum ersten Netzwerkknoten heruntergeladen zu werden.

In einer weiteren Ausführungsform ist die Installation des Computermessprogramms so ausgestaltet, dass das Computermessprogramm als Reaktion auf eine Interaktion eines mit dem Netzwerkknoten verbundenen Endgeräts eines Nutzer im Hintergrund zur dynamischen Bestimmung der verfügbaren Datenrate zwischen dem ersten und zweiten Netzwerkknoten gestartet und ausgeführt wird. Durch die Kopplung der Bestimmung der Übertragungsleistung an eine Handlung des Nutzers wird gewährleistet, dass diese Bestimmung für einen bestimmten Zustand / Zeitpunkt während der Nutzung des Datennetzes durch den Nutzer stattfindet. Somit sind die bestimmten Größen realistisch für die jeweilige Nutzungsweise des Datennetzes durch den Nutzer. Der Begriff "Endgerät" bezeichnet hier ein an den Netzwerkknoten angeschlossenes Gerät im Umfeld des Nutzers, beispielsweise einen Home-PC oder ein Mobilfunkgerät des Nutzers.

In einer Ausführungsform ist das Computermessprogramm so ausgestaltet, dass die Bestimmung der Übertragungsleistung während eines auf der bi-direktionalen Datenverbindung zusätzlichen stattfindenden Datenverkehrs vorgenommen wird. Als Datenverkehr wird dabei eine uni- oder bi-direktionaler Datenübertragung entlang einer Datenverbindung bezeichnet. Dieser Datenverkehr kann dabei beispielsweise vom Netzwerkknoten für diese Bestimmung extra initiert werden (aktiver Datenverkehr) oder ein von Nutzer initierter oder aus anderen Gründen gerade ablaufender Datenverkehr (passiver Datenverkehr) über diese Datenverbindung sein. Bei einem aktiven Datenverkehr wird beispielsweise ein simuliertes Telefongespräch vom erfindungsgemäßen Netzwerkknoten zu Messzwecken initiert. Alternativ kann die bi-direktionale Datenverbindung gerade von Nutzern als VoIP-Verbindung (z.B. ein Telefongespräch als passiver Datenverkehr oder passive VoIP-Verbindung) genutzt werden, während im Hintergrund zu dieser Nutzung die real verfügbare Datenrate über diese Verbindung mittels des Computermessprogramm während der ablaufenden VoIP-Verbindung bestimmt wird. Für das Ausführen des Computermessprogarmms während eines nicht vom Netzwerkknoten extra für die Bestimmung initiierten Datenverkehrs besitzt der Netzwerkknoten ein Startmittel für das Computermessprogramm, das dieses bei einem festgestellten Datenverkehr startet. Dieses Startmittel kann auch Teil des Computermessprogramms sein, so dass dieses beispielsweise periodisch das Vorhandensein eines Datenverkehrs über den erfindungsgemäßen Netzwerkknoten prüft und bei vorhandenem Datenverkehr die Bestimmung der verfügbaren Datenrate veranlasst. Der Fachmann ist im Rahmen der vorliegenden Erfindung in der Lage, ein geeignetes Startmittel für das Computermessprogramm zu wählen.

Des Weiteren betrifft die Erfindung ein System zur Bestimmung der Übertragungsleistung in einem Datennetz, umfassend zumindest einen ersten und einen zweiten Netzwerkknoten, die mittels bi-direktionaler Datenverbindungen miteinander verbunden sind, wobei zumindest der erste Netzwerkknoten ein Netzwerkknoten gemäß der vorliegenden Erfindung mit einem darauf installierten Computermessprogramm zur einer dynamischen Bestimmung einer verfügbaren Datenrate in der bi-direktionalen Datenverbindung zu dem zweiten Netzwerkknoten ist. In einer weiteren Ausführungsform ist auch der zweite Netzwerkknoten ein Netzwerkknoten gemäß der vorliegenden Erfindung mit einem darauf installierten Computermessprogramm zur einer dynamischen Bestimmung einer verfügbaren Datenrate in der bi-direktionalen Datenverbindung zu dem ersten und/oder zu einem anderen Netzwerkknoten.

In einer Ausführungsform des Systems umfasst zumindest der erste Netzwerkknoten Mittel, die geeignet sind, die Konfiguration des ersten und/oder zweiten Netzwerkknotens als Reaktion auf die mit dem Computermessprogramm bestimmte Datenrate für der bi-direktionalen Datenverbindung so anzupassen, dass die verfügbare Datenrate erhöht wird, vorzugsweise besteht die Anpassung der Konfiguration in einer geeigneten Priorisierung der zu übertragenden Daten. Beispielsweise kann das Computermessprogramm eine Prioritizierung der Datenübertragung bei mehreren zu übertragenen Dateien vornehmen, so dass die schnell benötigten Dateien bevorzugt über die gemessene Datenverbindung übertragen werden und die anderen weniger schnell benötigten Dateien erst später bei wieder ausreichend verfügbarer Bandbreite übertragen werden. So kann die Menge der zu übertragenen Daten an die tatsächlich verfügbare Datenrate angepasst werden. Alternativ dazu könnten Daten mittels eines durch das Computermessprogramm angesteuerten Schalters über einen anderen Netzwerkknoten zu dem beabsichtigten Netzwerknoten umgeleitet werden.

In einer weiteren Ausführungsform umfasst das System Mittel zum automatischen Starten des Computermessprogramms ohne Interaktion des Nutzers mit einem der Netzwerkknoten, geeignet für eine kontinuierliche Bestimmung der verfügbaren Datenrate in der bi-direktionalen Datenverbindung. Eine periodische Bestimmung der Übertragungsleistung einer Datenverbindung liefert ein realistisches Abbild der verfügbaren Datenrate über einen gewünschten Zeitraum. Anhand dieses Abbildes kann beispielsweise eine notwendige Verbesserung des Datennetzes in bestimmten Bereichen erkannt und entsprechend umgesetzt werden, was die Kundenzufriedenheit erhöht. In einer Ausführungsform des Systems ist auch der zweite Netzwerkknoten ein erfindungsgemäßer Netzwerkknoten.

Die Erfindung betrifft des Weiteren ein Verfahren zur Bestimmung der Übertragungsleistung in Datennetzen zwischen einem ersten Netzwerkknoten, der ein Netzwerkknoten gemäß der vorliegenden Erfindung ist, und einem über eine bi-direktionalen Datenverbindung damit verbundenen zweiten Netzwerkknoten unter Verwendung eines auf dem ersten Netzwerkknoten installierten Computermessprogramms für eine dynamischen Bestimmung einer verfügbaren Datenrate in der bi-direktionalen Datenverbindung gekennzeichnet durch die Ausführung der nachfolgenden Schritte:
- Herunterladen zumindest einer ersten Referenzdatei mit einer ersten Referenzgröße von dem zweiten Netzwerkknoten zu dem ersten Netzwerkknoten mit einem ersten Zeitpunkt als Startpunkt des Herunterladens und einem zweiten Zeitpunkt als Endpunkt des Herunterladens,
- Hochladen zumindest einer zweiten Referenzdatei mit einer zweiten Referenzgröße vom dem ersten Netzwerkknoten zum zweiten Netzwerkknoten zwischen dem ersten und zweiten Zeitpunkt simultan zu dem Herunterladen der ersten Referenzdatei, und
- Bestimmen der verfügbaren Datenrate für das Herunterladen aus dem Zeitintervall zwischen erstem und zweitem Zeitpunkt und der Referenzgröße der ersten Referenzdatei.

In einer Ausführungsform des Verfahrens führt das Computermessprogramm zusätzlich die folgenden Schritte aus:
- Hochladen zumindest einer dritten Referenzdatei mit einer dritten Referenzgröße von dem ersten Netzwerkknoten zu dem zweiten Netzwerkknoten mit einem dritten Zeitpunkt als Startpunkt des Hochladens und einem vierten Zeitpunkt als Endpunkt des Hochladens,
- Herunterladen zumindest einer vierten Referenzdatei mit einer vierten Referenzgröße vom dem zweiten Netzwerkknoten zu dem ersten Netzwerkknoten zwischen dem dritten und vierten Zeitpunkt simultan zu dem Hochladen der dritten Referenzdatei, und
- Bestimmen der verfügbaren Datenrate für das Hochladen aus dem Zeitintervall zwischen drittem und viertem Zeitpunkt und der Referenzgröße der dritten Referenzdatei.

In einer weiteren Ausführungsform des Verfahrens werden die verfügbaren Datenraten für das Herunterladen und das Hochladen gleichzeitig bestimmt, vorzugsweise entspricht dabei die erste Referenzdatei der vierten Referenzdatei und/oder die zweite Referenzdatei der dritten Referenzdatei. Durch die gleichzeitige Bestimmung erhält man für den Normalbetrieb eines Datennetzes realistische Ergebnisse, da im normalen Betrieb der Datennetze gleichzeitiges Hoch- und Herunterladen von Dateien typisch ist. Dabei spart die zweifache Verwendung der ersten und zweiten Referenzdateien zur Bestimmung der umgekehrten Übertragungsleistung Speicherplatz auf den Netzwerkknoten.

In einer weiteren Ausführungsform umfasst das Verfahren des Weiteren den Schritt eines Anpassens einer Konfiguration des ersten und/oder zweiten Netzwerknotens als Reaktion auf die mit dem Computermessprogramm bestimmte Datenrate, so dass die verfügbare Datenrate erhöht wird, vorzugsweise besteht der Schritt des Anpassens der Konfiguration in einer geeigneten Priorisierung der zu übertragenden Daten.

In einer weiteren Ausführungsform umfasst das Verfahren des Weiteren den Schritt des Startens eines zusätzlichen stattfindenden Datenverkehrs durch den Netzwerkknoten (aktiver Datenverkehr) zur parallelen Bestimmung der Übertragungsleistung auf der bi-direktionalen Datenverbindung, oder das Feststellen eines stattfindenden Datenverkehrs auf der bi-direktionalen Datenverbindung (passiver Datenverkehr) durch den Netzwerkknoten und dem dadurch initiierten Startens des Computermessprogramms zur parallelen Bestimmung der Übertragungsleistung auf der bi-direktionalen Datenverbindung umfasst. Hiermit kann die tatsächlich vorhandene Datenrate noch realistischer getestet und entsprechende Schritte zur Verbesserung der Datenverbindung aufgrund der gewonnenen Messergebnisse unternommen werden.

In einer weiteren Ausführungsform umfasst das Verfahren des Weiteren ein oder mehrere Schritte zur Messung eines oder mehrerer Elemente der Gruppe Ping-Zeit, DNS Abfragezeit, RTP Jitter und Paketverlust von passiven und aktiven VoIP-Verbindungen und die Webserver-Leistung. Diese Elemente können mit aktivem oder passivem Datenverkehr oder ohne zusätzlichen Datenverkehr bestimmt werden.

### Kurze Beschreibung der Abbildungen

Diese und andere Aspekte der Erfindung werden im Detail in den Abbildungen wie folgt gezeigt.
- Abb.1:: eine Ausführungsform eines Systems mit Netzwerkknoten gemäß der vorliegenden Erfindung;
- Abb.2:: eine Ausführungsform des Verfahrens gemäß der vorliegenden Erfindung.

### Detailierte Beschreibung der Ausführungsbeispiele

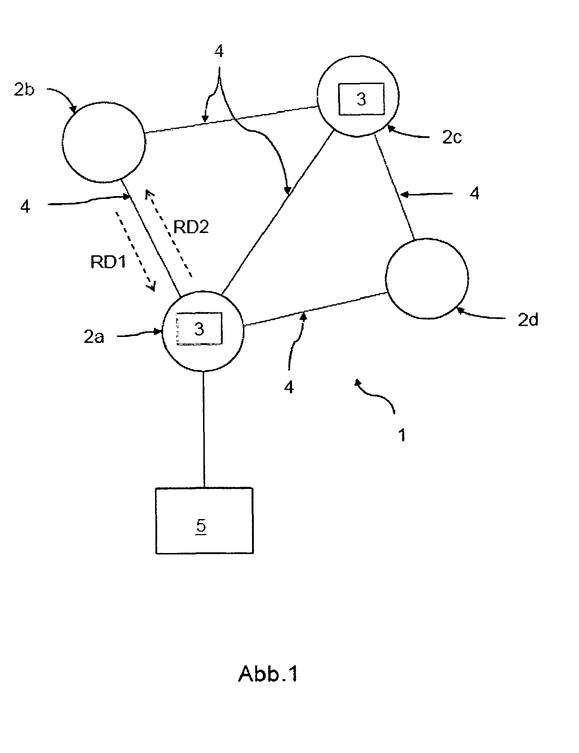

Abbildung 1 zeigt eine Ausführungsform eines Systems mit Netzwerkknoten 2a - 2d gemäß der vorliegenden Erfindung. Das System umfasst einen ersten, einen zweiten, einen dritten und einen vierten Netzwerkknoten 2a - 2d, die mittels bi-direktionaler Datenverbindungen 4 untereinander verbunden sind. Auf den Netzwerkknoten 2a und 2c sind dabei Computermessprogramme 3 installiert, mit denen eine dynamische Bestimmung der verfügbaren Datenraten in den bi-direktionalen Datenverbindungen 4 zwischen den Netzwerkknoten 2a - 2d ermöglicht wird. Exemplarisch ist hier die Bestimmung der verfügbaren Datenrate für ein Herunterladen einer Datei vom Netzwerkknoten 2b auf den Netzwerkknoten 2a mit dem installierten Computermessprogramm 3 anhand der gestrichelten Pfeile für die übertragenen Referenzdateien RD1 und RD2 dargestellt. Die verfügbaren Datenrate für ein Herunterladen wird mittels des Herunterladens der ersten Referenzdatei RD1 bei einem gleichzeitig stattfindenden Hochladens der zweiten Referenzdatei vom Netzwerkknoten 2a auf den zweiten Netzwerkknoten 2b mit dem Computermessprogramm 3 auf dem ersten Netzwerkknoten 2a bestimmt. Eine analoge Messung kann mit dem Computermessprogramm 3 für die Datenverbindungen 4 zu den Netzwerkknoten 2c und 2d durchgeführt werden. Durch das weitere im System auf dem Netzwerknoten 2c installierte Computermessprogramm 3 können die verfügbaren Datenraten für die Datenverbindungen 4 zwischen den Netzwerkknoten 2b und 2c sowie 2c und 2d bestimmt werden. In dem gezeigten erfindungsgemäßen System ist an dem Netzwerkknoten 2a ein Endgerät 5 eines Nutzers des Datennetzwerks 1 angeschlossen. Hierbei ist die Installation des Computermessprogramms 3 auf dem Netzwerkknoten 2a so ausgestaltet, dass das Computermessprogramm 3 als Reaktion auf eine Interaktion eines Nutzer mit dem Endgerät 5 im Hintergrund zur dynamischen Bestimmung der verfügbaren Datenrate zwischen dem ersten und zweiten Netzwerkknoten 2a, 2b startet und ausführt. Das Computermessprogramm 3 ist des Weiteren so ausgestaltet, dass es analog mittels Hochladen einer dritten Referenzdatei mit einer dritten Referenzgröße zu dem zweiten Netzwerkknoten 2b bei simultanem Herunterladen einer vierten Referenzdatei vom zweiten Netzwerkknoten 2b auch die verfügbare Datenrate für das Hochladen bestimmen kann.

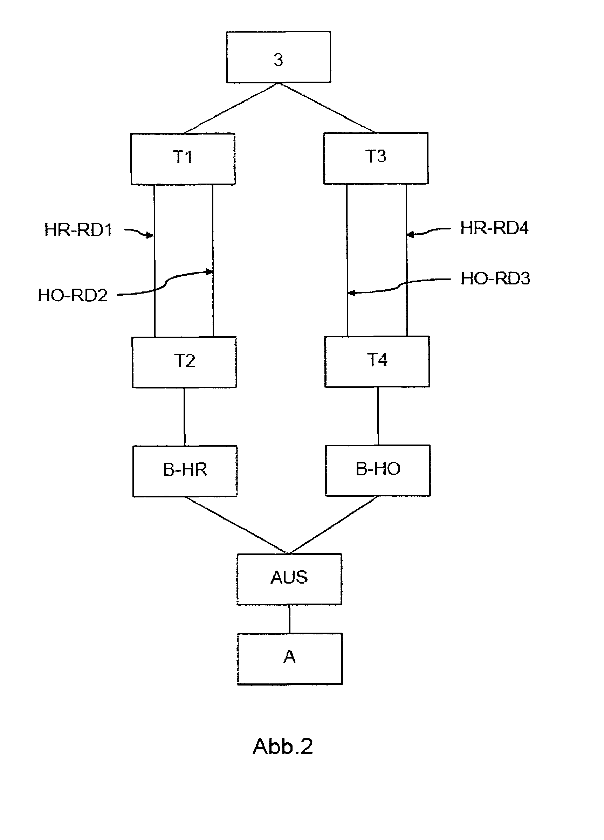

Abbildung 2 zeigt eine Ausführungsform des Verfahrens gemäß der vorliegenden Erfindung zur Bestimmung der Übertragungsleistung in einer Datenverbindung 4 zwischen einem ersten erfindungsgemäßen Netzwerkknoten 2a mit darauf installiertem Computermessprogramm 3 und einem zweiten Netzwerkknoten 2b. Das Computermessprogramm 3 wird dabei für eine dynamischen Bestimmung der verfügbaren Datenrate B-HR, B-HO in der bi-direktionalen Datenverbindung 4 verwendet. Das Verfahren beinhaltet dazu die folgenden Schritte:

Nach dem Starten des Computermessprogramms 3 auf dem ersten Netzwerkknoten 2a wird eine ersten Referenzdatei RD1 mit einer ersten Referenzgröße von dem zweiten Netzwerkknoten 2b zu dem ersten Netzwerkknoten 2a heruntergeladen. Der Prozess des Herunterladens beginnt zu einem ersten Zeitpunkt T1 und endet nach einem vollständigen Herunterladen zu einem zweiten Zeitpunkt T2. Parallel dazu wird eine zweite Referenzdatei RD2 mit einer zweiten Referenzgröße von dem ersten Netzwerkknoten 2a zum zweiten Netzwerkknoten 2b zwischen dem ersten und zweiten Zeitpunkt T1, T2 hochgeladen. Nach Beendigung des Herunterladens wird die verfügbare Datenrate B-HR für das Herunterladen aus dem Zeitintervall zwischen erstem und zweitem Zeitpunkt T1, T2 und der Referenzgröße der ersten Referenzdatei RD1 bestimmt. Für die Bestimmung B-HR wird die erste Referenzgröße durch die Zeitdauer zwischen T1 und T2 geteilt. Entsprechend kann ebenfalls die verfügbare Datenrate B-HO für das Hochladen von Dateien in der Datenverbindung 4 zwischen den ersten und zweiten Netzwerkknoten 2a und 2b bestimmt werden. Dazu wird eine dritte Referenzdatei RD3 mit einer dritten Referenzgröße von dem ersten Netzwerkknoten 2a zu dem zweiten Netzwerkknoten 2b hochgeladen. Das Hochladen HO-RD3 beginnt zu einem dritten Zeitpunkt T3 und ist zu einem vierten Zeitpunkt T4 abgeschlossen. Parallel dazu wird eine vierte Referenzdatei RD4 mit einer vierten Referenzgröße von dem zweiten Netzwerkknoten 2b zu dem ersten Netzwerkknoten 2a zwischen dem dritten und vierten Zeitpunkt T3, T4 heruntergeladen HR-RD4. Nach Beendigung des Hochladens wird die verfügbare Datenrate B-HO für das Hochladen aus dem Zeitintervall zwischen drittem und viertem Zeitpunkt T3, T4 und der Referenzgröße der dritten Referenzdatei RD3 bestimmt. Für die Bestimmung B-HO wird die dritte Referenzgröße durch die Zeitdauer zwischen T3 und T4 geteilt. Die Ergebnisse zu B-HR und B-HO können anschließend ausgewertet werden. Diese Auswertung AUS kann durch das Computermessprogramm 3 selber vorgenommen werden. In einer anderen Ausführungsform ist das Computermessprogramm 3 dazu ausgestaltet, dass es die bestimmten verfügbaren Datenraten zu den entsprechenden Datenverbindungen 4 an eine Zentralstelle übermittelt. Diese Zentralstelle ist beispielsweise mit dem Datennetz 1 verbunden, zu dem die Datenverbindung 4 gehört, für die die verfügbaren Datenraten bestimmt wurden. Sofern noch weitere Messungen zur Ping-Zeit, DNS Abfragezeit, RTP Jitter und Paketverlust von passiven und aktiven VoIP-Verbindungen und Webserver-Leistung durchgeführt wurden, können auch diese Messungen in die Auswertung AUS mit einbezogen werden. Die Ping-Zeit (oder auch RTT-Zeit genannt) bezeichnet die Umlaufzeit eines Datenpakets, also die Zeit vom Versenden einer Datei an eine Adresse bis zum Erhalt einer Antwort nach dem Empfang dieser Datei durch diese Adresse. DNS ist ein weltweit verteilter hierarchischer Verzeichnisdienst, der den Namensraum des Internets verwaltet. Hauptsächlich wird das DNS zur Umsetzung von Domainnamen in IP-Adressen benutzt. RTP bezeichnet hierbei ein Transportprotokoll für Sprachverbindungen in VoIP-Verbindungen. IP-Telefonie (Internet-Protokoll-Telefonie) ist das Telefonieren über Computernetzwerke, welche nach Internet-Standards aufgebaut sind. Dabei werden für Telefonie typische Informationen, d. h. Sprache und Steuerinformationen beispielsweise für den Verbindungsaufbau, über ein auch für Datenübertragung nutzbares Netz übertragen. Bei den Gesprächsteilnehmern können sowohl Computer, auf IP-Telefonie spezialisierte Telefonendgeräte, als auch über spezielle Adapter angeschlossene klassische Telefone die Verbindung herstellen. In einer Ausführungsform kann der erfindungsgemäße Netzwerkknoten eine über di bi-direktionale Datenverbindung ablaufende VoIP-Verbindung passive für die Bestimmung der verfügbaren Datenrate auf dieser bi-direktionalen Datenverbindung verwenden oder aktive eine VoIP-Verbindung mit Datenverkehr über diese bi-direktionale Datenverbindung aufbauen, wo parallel dazu die Bestimmung der verfügbaren Datenrate durchgeführt wird.

Diese Auswertung AUS kann dazu benutzt werden, die Konfiguration des ersten und/oder zweiten Netzwerkknotens 2a, 2b über geeignete Mittel der Netzwerkknoten 2a, 2b für die bi-direktionale Datenverbindung 4 so anzupassen A, dass die verfügbaren Datenraten B-HR, B-HO erhöht werden. Beispielsweise besteht die Anpassung A der Konfiguration in einer geeigneten Priorisierung der zu übertragenden Daten in den jeweiligen Netzwerkknoten 2a, 2b.

Die hier gezeigten Ausführungsformen stellen nur Beispiele für die vorliegende Erfindung dar und dürfen nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Datennetz
- 2a - 2d: Netzwerkknoten
- 3: Computermessprogramm
- 4: bi-direktionale Datenverbindung
- 5: Endgerät
- RD1: erste Referenzdatei
- RD2: zweite Referenzdatei
- RD3: dritte Referenzdatei
- RD4: vierte Referenzdatei
- T1: erster Zeitpunkt
- T2: zweiter Zeitpunkt
- T3: dritter Zeitpunkt
- T4: vierter Zeitpunkt
- B-HR: Bestimmen der verfügbaren Datenrate für das Herunterladen
- B-HO: Bestimmen der verfügbaren Datenrate für das Hochladen
- HR-RD1: Herunterladen der ersten Referenzdatei
- HO-RD2: Hochladen der zweiten Referenzdatei
- HO-RD3: Hochladen der dritten Referenzdatei
- HR-RD4: Herunterladen der vierten Referenzdatei
- AUS: Auswerten der Ergebnisse
- A: Anpassen der Konfiguration des ersten / zweiten Netzwerkknotens

## Patentansprüche

1. Ein Netzwerkknoten (2a), vorzugsweise ein Server oder ein Router, für ein Datennetz (1) mit mehreren Netzwerkknoten (2a - 2d), umfassend ein auf dem Netzwerkknoten (2a) installiertes Computermessprogramm (3), vorgesehen zur Bestimmung der Übertragungsleistung in dem Datennetz (1) mittels einer dynamischen Bestimmung einer verfügbaren Datenrate (B-HR, B-HO) in einer bi-direktionalen Datenverbindung (4) zu einem zweiten Netzwerkknoten (2b),
**dadurch gekennzeichnet,**
**dass** das Computermessprogramm (3) so ausgestaltet ist, dass es zumindest für ein Herunterladen (HR-RD1) zumindest einer ersten Referenzdatei (RD1) mit einer ersten Referenzgröße von dem zweiten Netzwerkknoten (2b) mit einem ersten Zeitpunkt (T1) als Startpunkt des Herunterladens und einem zweiten Zeitpunkt (T2) als Endpunkt des Herunterladens und für ein Hochladen (HO-RD2) zumindest einer zweiten Referenzdatei (RD2) mit einer zweiten Referenzgröße zu dem zweiten Netzwerkknoten (2b) zwischen dem ersten und zweiten Zeitpunkt (T1, T2) simultan zu dem Herunterladen (HR-RD1) der ersten Referenzdatei (RD1) vorgesehen ist, und zumindest dafür vorgesehen ist, aus dem Zeitintervall zwischen erstem und zweitem Zeitpunkt (T1, T2) und der Referenzgröße der ersten Referenzdatei (RD1) die verfügbaren Datenrate (B-HR) für das Herunterladen zu bestimmen.

2. Der Netzwerkknoten (2a) nach Anspruch 1,
**dadurch gekennzeichnet,**
**dass** die erste Referenzgröße mehr als 30 MB, vorzugsweise mehr als 50 MB, besonders bevorzugt 100 MB, beträgt.

3. Der Netzwerkknoten (2a) nach Anspruch 1 oder 2,
**dadurch gekennzeichnet,**
**dass** das Computermessprogramm (3) so ausgestaltet ist, dass es zusätzlich für ein Hochladen (HO-RD3) zumindest einer dritten Referenzdatei (RD3) mit einer dritten Referenzgröße zu dem zweiten Netzwerkknoten (2b) mit einem dritten Zeitpunkt (T3) als Startpunkt des Hochladens (HO-RD3) und einem vierten Zeitpunkt (T4) als Endpunkt des Hochladens (HO-RD3) und für ein Herunterladen (HR-RD4) zumindest einer vierten Referenzdatei (RD4) mit einer vierten Referenzgröße vom dem zweiten Netzwerkknoten (2b) zwischen dem dritten und vierten Zeitpunkt (T3, T4) simultan zu dem Hochladen (HO-RD3) der dritten Referenzdatei (RD3) vorgesehen ist, und zumindest dafür vorgesehen ist, aus dem Zeitintervall zwischen drittem und viertem Zeitpunkt (T3, T4) und der Referenzgröße der dritten Referenzdatei (RD3) die verfügbaren Datenrate (B-HO) für das Hochladen zu bestimmen.

4. Der Netzwerkknoten (2a) nach Anspruche 3,
**dadurch gekennzeichnet,**
**dass** die dritte Referenzgröße größer als 1 MB, vorzugsweise größer 2 als MB, besonders bevorzugt 3 MB, beträgt.

5. Der Netzwerkknoten (2a) nach einem der voranstehenden Ansprüche,
**dadurch gekennzeichnet,**
**dass** die Installation des Computermessprogramms (3) so ausgestaltet ist, dass das Computermessprogramm (3) als Reaktion auf eine Interaktion eines mit dem Netzwerkknoten (2a) verbundenen Endgeräts (5) eines Nutzer im Hintergrund zur dynamischen Bestimmung der verfügbaren Datenrate (B-HR, B-HO) zwischen dem ersten und zweiten Netzwerkknoten (2a, 2b) gestartet und ausgeführt wird.

6. Der Netzwerkknoten (2a) nach einem der voranstehenden Ansprüche,
**dadurch gekennzeichnet,**
**dass** das Herunterladen gemäß HTTP erfolgt und/oder das Hochladen gemäß FTP erfolgt.

7. Der Netzwerkknoten (2a) nach einem der voranstehenden Ansprüche,
**dadurch gekennzeichnet,**
**dass** das Computermessprogramm (3) so ausgestaltet ist, dass die Bestimmung der Übertragungsleistung während eines auf der bi-direktionalen Datenverbindung (4) zusätzlichen stattfindenden Datenverkehrs vorgenommen wird

8. Ein System zur Bestimmung der Übertragungsleistung in einem Datennetz (1) umfassend zumindest einen ersten und einen zweiten Netzwerkknoten (2a, 2b), die mittels bi-direktionaler Datenverbindungen (4) miteinander verbunden sind, wobei zumindest der ersten Netzwerkknoten (2a) ein Netzwerkknoten nach Anspruch 1 mit einem darauf installierten Computermessprogramm (3) zu einer dynamischen Bestimmung einer verfügbaren Datenrate (B-HR, B-HO) in der bi-direktionalen Datenverbindung (4) zu dem zweiten Netzwerkknoten (2b) ist.

9. Das System nach Anspruch 8,
**dadurch gekennzeichnet,**
**dass** zumindest der erste Netzwerkknoten (2a) Mittel umfasst, die geeignet sind, die Konfiguration des ersten und/oder zweiten Netzwerkknotens (2a, 2b) als Reaktion auf die mit dem Computermessprogramm (3) bestimmte Datenrate für der bi-direktionalen Datenverbindung (4) so anzupassen (A), dass die verfügbare Datenrate (B-HR, B-HO) erhöht wird, vorzugsweise besteht die Anpassung (A) der Konfiguration in einer geeigneten Priorisierung der zu übertragenden Daten.

10. Das System nach einem der Ansprüche 8 oder 9,
**dadurch gekennzeichnet,**
**dass** das System Mittel zum automatischen Starten des Computermessprogramms (3) ohne Interaktion des Nutzers mit einem der Netzwerkknoten (2a - 2d) geeignet für eine kontinuierliche Bestimmung der verfügbaren Datenrate (B-HR, B-HO) in der bi-direktionalen Datenverbindung (4) umfasst.

11. Ein Verfahren zur Bestimmung der Übertragungsleistung in Datennetzen (1) zwischen einem ersten Netzwerkknoten (2a), der ein Netzwerkknoten nach Anspruch 1 ist, und einem über eine bi-direktionalen Datenverbindung (4) damit verbundenen zweiten Netzwerkknoten (2b) unter Verwendung eines auf dem ersten Netzwerkknoten (2a) installierten Computermessprogramms (3) für eine dynamischen Bestimmung einer verfügbaren Datenrate (B-HR, B-HO) in der bi-direktionalen Datenverbindung (4), **gekennzeichnet durch** die Ausführung der nachfolgenden Schritte:
- Herunterladen (HR-RD1) zumindest einer ersten Referenzdatei (RD1) mit einer ersten Referenzgröße von dem zweiten Netzwerkknoten (2b) zu dem ersten Netzwerkknoten (2a) mit einem ersten Zeitpunkt (T1) als Startpunkt des Herunterladens und einem zweiten Zeitpunkt (T2) als Endpunkt des Herunterladens,
- Hochladen (HR-RD2) zumindest einer zweiten Referenzdatei (RD2) mit einer zweiten Referenzgröße von dem ersten Netzwerkknoten (2a) zum zweiten Netzwerkknoten (2b) zwischen dem ersten und zweiten Zeitpunkt (T1, T2) simultan zu dem Herunterladen (HR-RD1) der ersten Referenzdatei (RD1), und
- Bestimmen der verfügbaren Datenrate (B-HR) für das Herunterladen aus dem Zeitintervall zwischen erstem und zweitem Zeitpunkt (T1, T2) und der Referenzgröße der ersten Referenzdatei (RD1).

12. Das Verfahren nach Anspruch 11,
**dadurch gekennzeichnet,**
**dass** das Computermessprogramm (3) zusätzlich die folgenden Schritte ausführt:
- Hochladen (HO-RD3) zumindest einer dritten Referenzdatei (RD3) mit einer dritten Referenzgröße von dem ersten Netzwerkknoten (2a) zu dem zweiten Netzwerkknoten (2b) mit einem dritten Zeitpunkt (T3) als Startpunkt des Hochladens und einem vierten Zeitpunkt (T4) als Endpunkt des Hochladens,
- Herunterladen (HR-RD4) zumindest einer vierten Referenzdatei (RD4) mit einer vierten Referenzgröße vom dem zweiten Netzwerkknoten (2b) zu dem ersten Netzwerkknoten (2a) zwischen dem dritten und vierten Zeitpunkt (T3, T4) simultan zu dem Hochladen (HO-RD3) der dritten Referenzdatei (RD3), und
- Bestimmen der verfügbaren Datenrate (B-HO) für das Hochladen aus dem Zeitintervall zwischen drittem und viertem Zeitpunkt (T3, T4) und der Referenzgröße der dritten Referenzdatei (RD3).

13. Das Verfahren nach Anspruch 12,
**dadurch gekennzeichnet,**
**dass** die verfügbaren Datenraten (B-HR, B-HO) für das Herunterladen und das Hochladen gleichzeitig bestimmt werden, vorzugsweise entspricht dabei die erste Referenzdatei (RD1) der vierten Referenzdatei (RD4) und/oder die zweite Referenzdatei (RD2) der dritten Referenzdatei (RD3).

14. Das Verfahren nach einem der Ansprüche 11 bis 13,
**dadurch gekennzeichnet,**
**dass** das Verfahren des Weiteren den Schritt eines Anpassens (A) einer Konfiguration des ersten und/oder zweiten Netzwerkknotens (2a, 2b) als Reaktion auf die mit dem Computermessprogramm (3) bestimmte Datenrate (B-HR, B-HO) umfasst, so dass die verfügbare Datenrate erhöht wird, vorzugsweise besteht der Schritt des Anpassens (A) der Konfiguration in einer geeigneten Priorisierung der zu übertragenden Daten.

15. Das Verfahren nach einem der Ansprüche 11 bis 14,
**dadurch gekennzeichnet,**
**dass** das Verfahren des Weiteren den Schritt des Startens eines zusätzlichen stattfindenden Datenverkehrs durch den Netzwerkknoten (2a) zur parallelen Bestimmung der Übertragungsleistung auf der bi-direktionalen Datenverbindung, (4) oder das Feststellen eines stattfindenden Datenverkehrs auf der bi-direktionalen Datenverbindung (4) durch den Netzwerkknoten (2a) und dem dadurch initiierten Startens des Computermessprogramms (3) zur parallelen Bestimmung der Übertragungsleistung auf der bi-direktionalen Datenverbindung (4) umfasst.

## Claims

1. A network node (2a), preferably a server or a router, for a data network (1) having several network nodes (2a - 2d), comprising a computer-based measuring program (3) installed on the network node (2a) and intended for determining the transmission capacity in the data network (1) by means of a dynamic determination of the data rate (B-HR, B-HO) available in a bidirectional data connection (4) to a second network node (2b),
**characterized in that**
the computer-based measuring program (3) is configured in such a way that it is provided at least for downloading (HR-RD1) at least a first reference file (RD1) having a first reference size from the second network node (2b) at a first point in time (T1) as the starting point of the downloading and at a second point in time (T2) as the end point of the download, and for uploading (HO-RD2) at least a second reference file (RD2) having a second reference size to the second network node (2b) between the first and the second points in time (T1, T2), simultaneously with the downloading (HR-RD1) of the first reference file (RD1), and said computer-based measuring program is at least provided to determine the data rate (B-HR) available for the downloading on the basis of the time interval between the first and second points in time (T1, T2) and on the basis of the reference size of the first reference file (RD1).

2. The network node (2a) according to claim 1,
**characterized in that**
the first reference size is more than 30 MB, preferably more than 50 MB, especially preferably 100 MB.

3. The network node (2a) according to claim 1 or 2,
**characterized in that**
the computer-based measuring program (3) is configured in such a way that it is additionally provided for uploading (HO-RD3) at least a third reference file (RD3) having a third reference size to the second network node (2b) at a third point in time (T3) as the starting point of the uploading (HO-RD3), and at a fourth point in time (T4) as the end point of the uploading (HR-RD3), and it is provided for downloading (HR-RD4) at least a fourth reference file (RD4) having a fourth reference size from the second network node (2b) between the third and fourth points in time (T3, T4), simultaneously to the uploading (HO-RD3) of the third reference file (RD3), and it is at least provided to determine the data rate (B-HO) available for the uploading on the basis of the time interval between the third and fourth points in time (T3, T4), and on the basis of the reference size of the third reference file (RD3).

4. The network node (2a) according to claim 3,
**characterized in that**
the third reference size is more than 1 MB, preferably more than 2 MB, especially preferably 3 MB.

5. The network node (2a) according to one of the preceding claims,
**characterized in that**
the installation of the computer-based measuring program (3) is configured in such a way that the computer-based measuring program (3) is started and executed in the background in response to an interaction on the part of the user with the terminal device (5) that is connected to the network node (2a) for purposes of dynamically determining the data rate (B-HR, B-HO) available between the first and second network nodes (2a, 2b).

6. The network node (2a) according to one of the preceding claims,
**characterized in that**
the downloading is carried out according to the HTTP and/or the uploading is carried out according to the FTP.

7. The network node (2a) according to one of the preceding claims,
**characterized in that**
the computer-based measuring program (3) is configured in such a way that the transmission capacity is determined during data traffic that is additionally taking place on the bidirectional data connection (4).

8. A system for determining the transmission capacity in a data network (1), comprising at least a first and a second network node (2a, 2b) that are connected to each other via bidirectional data connections (4), whereby at least the first network node (2a) is a network node according to claim 1, having a computer-based measuring program (3) installed on it that allows a dynamic determination of the data rate (B-HR, B-HO) available in the bidirectional data connection (4) to the second network node (2b).

9. The system according to claim 8,
**characterized in that**
at least the first network node (2a) comprises means that are suitable for adapting (A) the configuration of the first and/or second network node (2a, 2b) in response to the data rate determined with the computer-based measuring program (3) for the bidirectional data connection (4) in such a way that the available data rate (B-HR, B-HO) is increased, preferably the adaptation (A) of the configuration consists of a suitable prioritization of the data that is to be transmitted.

10. The system according to either claim 8 or 9,
**characterized in that**
the system has means for automatically starting the computer-based measuring program (3) without interaction on the part of the user with one of the network nodes (2a - 2d) that are suitable for a continuous determination of the data rate (B-HR, B-HO) available in the bidirectional data connection (4).

11. A method for determining the transmission capacity in data networks (1) between a first network node (2a), which is a network node according to claim 1, and a second network node (2b) connected to it via a bidirectional data connection (4), making use of a computer-based measuring program (3) installed on the first network node (2a) for purposes of dynamically determining the data rate (B-HR, B-HO) available in the bidirectional data connection (4), **characterized by** the execution of the following steps:
- downloading (HR-RD1) at least a first reference file (RD1) having a first reference size from the second network node (2b) to the first network node (2a) at a first point in time (T1) as the starting point of the downloading and at a second point in time (T2) as the end point of the download,
- uploading (HO-RD2) at least a second reference file (RD2) having a second reference size from the first network node (2a) to the second network node (2b) between the first and the second points in time (T1, T2), simultaneously with the downloading (HR-RD1) of the first reference file (RD1), and
- determining the data rate (B-HR) available for the downloading on the basis of the time interval between the first and second points in time (T1, T2) and on the basis of the reference size of the first reference file (RD1).

12. The method according to claim 11,
**characterized in that**
the computer-based measuring program (3) additionally executes the following steps:
- uploading (HO-RD3) at least a third reference file (RD3) having a third reference size from the first network node (2a) to the second network node (2b) at a third point in time (T3) as the starting point of the downloading and at a fourth point in time (T4) as the end point of the upload,
- downloading (HR-RD4) at least a fourth reference file (RD4) having a fourth reference size from the second network node (2b) to the first network node (2a) between the third and the fourth points in time (T3, T4), simultaneously with the uploading (HO-RD3) of the third reference file (RD3), and
- determining the data rate (B-HO) available for the uploading on the basis of the time interval between the third and fourth points in time (T3, T4) and on the basis of the reference size of the third reference file (RD3).

13. The method according to claim 12, **characterized in that** the data rates (B-HR, B-HO) available for the downloading and the uploading are determined at the same time, here, the first reference file (RD1) preferably corresponds to the fourth reference file (RD4) and/or the second reference file (RD2) preferably corresponds to the third reference file (RD3).

14. The method according to one of claims 11 to 13,
**characterized in that**
the method also comprises the step of adapting (A) a configuration of the first and/or second network node (2a, 2b) in response to the data rate (B-HR, B-HO) determined with the computer-based measuring program (3), so that the available data rate is increased, preferably, the step of adapting (A) the configuration consists of a suitable prioritization of the data that is to be transmitted.

15. The method according to one of claims 11 to 14,
**characterized in that**
the method also comprises the step of starting additional data traffic that is taking place via the network node (2a) for the parallel determination of the transmission capacity on the bidirectional data connection (4), or it comprises determining data traffic that is taking place on the bidirectional data connection (4) via the network node (2a), and it also comprises the starting of the computer-based measuring program (3) thus initiated for the parallel determination of the transmission capacity on the bidirectional data connection (4).

## Revendications

1. Noeud de réseau (2a), de préférence serveur ou routeur, pour un réseau de données (1) comportant plusieurs noeuds de réseau (2a-2d), comprenant un programme informatique de mesure (3) installé sur le noeud de réseau (2a), et prévu pour déterminer la puissance de transmission dans le réseau de données (1) au moyen d'une détermination dynamique d'un débit de données disponible (B-HR, B-HO) dans une liaison de données bidirectionnelle (4) vers un deuxième noeud de réseau (2b), **caractérisé en ce que** le programme informatique de mesure (3) est conçu de manière telle qu'il est prévu au moins pour un téléchargement (HR-RD1) d'au moins un premier fichier de référence (RD1) comportant une première grandeur de référence depuis le deuxième noeud de réseau (2b), avec un premier instant (T1) en tant que point de départ du téléchargement et un deuxième instant (T2) en tant que point final du téléchargement, et pour un chargement (HO-RD2) d'au moins un deuxième fichier de référence (RD2) comportant une deuxième grandeur de référence vers le deuxième noeud de réseau (2b) entre le premier et le deuxième instant (T1, T2) simultanément au téléchargement (HR-RD1) du premier fichier de référence (RD1), et qu'il est prévu au moins pour déterminer, à partir de l'intervalle de temps entre le premier et le deuxième instant (T1, T2) et de la grandeur de référence du premier fichier de référence (RD1), le débit de données disponible (B-HR) pour le téléchargement.

2. Noeud de réseau (2a) selon la revendication 1, **caractérisé en ce que** la première grandeur de référence est supérieure à 30 MB, de préférence supérieure à 50 MB et, de manière particulièrement préférentielle, supérieure à 100 MB.

3. Noeud de réseau (2a) selon la revendication 1 ou 2, **caractérisé en ce que** le programme informatique de mesure (3) est conçu de manière telle qu'il est en outre prévu pour un chargement (HR-RD3) d'au moins un troisième fichier de référence (RD3) comportant une troisième grandeur de référence vers le deuxième noeud de réseau (2b), avec un troisième instant (T3) en tant que point de départ du chargement (HO-RD3) et un quatrième instant (T4) en tant que point final du chargement (HO-RD3), et pour un téléchargement (HR-RD4) d'au moins un quatrième fichier de référence (RD4) comportant une quatrième grandeur de référence depuis le deuxième noeud de réseau (2b) entre le troisième et le quatrième instant (T3, T4) simultanément au chargement (HO-RD3) du troisième fichier de référence (RD3), et qu'il est prévu au moins pour déterminer, à partir de l'intervalle de temps entre le troisième et le quatrième instant (T3, T4) et de la grandeur de référence du troisième fichier de référence (RD3), le débit de données disponible (B-HO) pour le chargement.

4. Noeud de réseau (2a) selon la revendication 3, **caractérisé en ce que** la troisième grandeur de référence est supérieure à 1 MB, de préférence supérieure à 2 MB et, de manière particulièrement préférentielle, supérieure à 3 MB.

5. Noeud de réseau (2a) selon l'une des revendications précédentes, **caractérisé en ce que** l'installation du programme informatique de mesure (3) est conçue pour que le programme informatique de mesure (3) soit lancé et exécuté, en réaction à une interaction d'un terminal (5) d'un utilisateur connecté au noeud de réseau (2a), en arrière-plan pour la détermination dynamique du débit de données disponible (B-HR, B-HO) entre le premier et le deuxième noeud de réseau (2a, 2b).

6. Noeud de réseau (2a) selon l'une des revendications précédentes, **caractérisé en ce que** le téléchargement s'effectue selon le protocole HTTP et/ou le chargement, selon le protocole FTP.

7. Noeud de réseau (2a) selon l'une des revendications précédentes, **caractérisé en ce que** le programme informatique de mesure (3) est conçu de telle sorte que la détermination de la puissance de transmission est effectuée pendant un trafic de données supplémentaire en cours sur la liaison de données bidirectionnelle (4).

8. Système de détermination de la puissance de transmission dans un réseau de données (1), comprenant au moins un premier et un deuxième noeud de réseau (2a, 2b) qui sont reliés entre eux au moyen de liaisons de données bidirectionnelles (4), au moins le premier noeud de réseau (2a) étant un noeud de réseau selon la revendication 1 avec un programme informatique de mesure (3) installé dessus pour une détermination dynamique d'un débit de données disponible (B-HR, B-HO) dans la liaison de données bidirectionnelle (4) vers le deuxième noeud de réseau (2b).

9. Système selon la revendication 8, **caractérisé en ce qu'**au moins le premier noeud de réseau (2a) comprend des moyens appropriés pour adapter la configuration du premier et/ou du deuxième noeud de réseau (2a, 2b) en réaction au débit de données de la liaison de données bidirectionnelle (4) déterminé au moyen du programme informatique de mesure (3) de manière telle que le débit de données disponible (BHR, B-HO) est augmenté, l'adaptation (A) de la configuration consistant préférentiellement dans une priorisation adaptée des données à transmettre.

10. Système selon l'une des revendications 8 ou 9, **caractérisé en ce que** le système comprend des moyens pour le lancement automatique du programme informatique de mesure (3) sans interaction de l'utilisateur avec l'un des noeuds de réseau (2a - 2d), lesdits moyens étant appropriés pour une détermination continue du débit de données disponible (B-HR, B-HO) dans la liaison de données bidirectionnelle (4).

11. Procédé pour déterminer la puissance de transmission dans des réseaux de données (1) entre un premier noeud de réseau (2a), qui est un noeud de réseau selon la revendication 1, et un deuxième noeud de réseau (2b), qui y est relié par une liaison de données bidirectionnelle (4), moyennant l'utilisation d'un programme informatique de mesure (3) installé sur le premier noeud de réseau (2a) pour une détermination dynamique d'un débit de données disponible (B-HR, B-HO) dans la liaison de données bidirectionnelle (4), **caractérisé par** l'exécution des étapes suivantes :
- téléchargement (HR-RD1) d'au moins un premier fichier de référence (RD1) comportant une première grandeur de référence depuis le deuxième noeud de réseau (2b) vers le premier noeud de réseau (2a), avec un premier instant (T1) en tant que point de départ du téléchargement et un deuxième instant (T2) en tant que point final du téléchargement ;
- chargement (HO-RD2) d'au moins un deuxième fichier de référence (RD2), comportant une deuxième grandeur de référence, du premier noeud de réseau (2a) vers le deuxième noeud de réseau (2b) entre le premier et le deuxième instant (T1, T2) simultanément au téléchargement (HR-RD1) du premier fichier de référence (RD1) et
- détermination du débit de données disponible (B-HR) pour le téléchargement à partir de l'intervalle de temps entre le premier et le deuxième instant (T1, T2) et de la grandeur de référence du premier fichier de référence (RD1).

12. Procédé selon la revendication 11, **caractérisé en ce que** le programme informatique de mesure (3) exécute en outre les étapes suivantes :
- chargement (HO-RD3) d'au moins un troisième fichier de référence (RD3), comportant une troisième grandeur de référence, du premier noeud de réseau (2a) vers le deuxième noeud de réseau (2b), avec un troisième instant (T3) en tant que point de départ du chargement et à un quatrième instant (T4) en tant que point final du chargement ;
- téléchargement (HR-RD4) d'au moins un quatrième fichier de référence (RD4), comportant une quatrième grandeur de référence, du deuxième noeud de réseau (2b) vers le premier noeud de réseau (2a) entre le troisième et le quatrième instant (T3, T4) simultanément au chargement (HO-RD3) du troisième fichier de référence (RD3) et
- détermination du débit de données disponible (B-HO) pour le chargement à partir de l'intervalle de temps entre le troisième et le quatrième instant (T3, T4) et de la grandeur de référence du troisième fichier de référence (RD3).

13. Procédé selon la revendication 12, **caractérisé en ce que** les débits de données disponibles (B-HR, B-HO) pour le téléchargement et le chargement sont déterminés simultanément, le premier fichier de référence (RD 1) correspondant préférentiellement au quatrième fichier de référence (RD4) et/ou le deuxième fichier de référence (RD2), au troisième fichier de référence (RD3).

14. Procédé selon l'une des revendications 11 à 13, **caractérisé en ce que** le procédé comporte en outre l'étape consistant à adapter (A) une configuration du premier et/ou du deuxième noeud de réseau (2a, 2b) en réaction au débit de données (B-HR, B-HO) déterminé au moyen du programme informatique de mesure (3), de sorte que le débit de données disponible est augmenté, l'étape d'adaptation (A) de la configuration consistant préférentiellement à prioriser de manière appropriée les données à transmettre.

15. Procédé selon l'une des revendications 11 à 14, **caractérisé en ce que** le procédé comporte en outre l'étape de démarrage d'un trafic de données supplémentaire en cours par le noeud de réseau (2a) pour la détermination parallèle de la puissance de transmission sur la liaison de données bidirectionnelle (4), ou la constatation d'un trafic de données en cours sur la liaison de données bidirectionnelle (4) par le noeud de réseau (2a) et le lancement de ce fait initialisé du programme informatique de mesure (3) pour la détermination parallèle de la puissance de transmission sur la liaison de données bidirectionnelle (4).
